# EUROPEAN PATENT SPECIFICATION

(11) **EP 4 108 972 B1**
(45) Date of publication and mention of the grant of the patent: **16.10.2024**
(21) Application number: 21382548.2
(22) Date of filing: 21.06.2021
(51) Int. Cl.: F16L 55/103, F25D 15/00

(54) **METHOD FOR THE FREEZING OF FLUIDS IN PIPES IN AN INVASIVE AND/OR NON-INVASIVE WAY, FOR RELEASING METALLIC ELEMENTS OR FOR MAKING MECHANICAL ADJUSTMENTS BY MEANS OF A CLOSED CIRCUIT**
VERFAHREN ZUM EINFRIEREN VON FLÜSSIGKEITEN IN ROHREN AUF INVASIVE UND/ODER NICHTINVASIVE WEISE, ZUM LÖSEN VON METALLISCHEN ELEMENTEN ODER ZUR DURCHFÜHRUNG VON MECHANISCHEN EINSTELLUNGEN MITTELS EINES GESCHLOSSENEN KREISLAUFS
PROCÉDÉ POUR LA CONGÉLATION DE FLUIDES DANS DES TUYAUX DE MANIÈRE INVASIVE ET/OU NON INVASIVE, POUR LE DÉGAGEMENT D'ÉLÉMENTS MÉTALLIQUES OU POUR FAIRE DE RÉGLAGES MÉCANIQUES AU MOYEN D'UN CIRCUIT FERMÉ

(43) Date of publication of application: 28.12.2022
(73) Proprietor: B CONTINUITY SOLUTIONS, S.L., 43006 Tarragona (ES)
(72) Inventor: BALLESTE ORPINELL, David, 43006 Tarragona (ES)
(74) Representative: Manresa Medina, José Manuel

(56) References cited:
- US-A- 4 112 706
- US-A- 4 416 118
- US-A1- 2013 152 608
- US-B2- 10 496 072

## Description

Method for freezing of fluids in pipes in an invasive and/or in a non-invasive way, for realising metallic elements or for making mechanical adjustments by means of a closed circuit, of the type comprising: a first phase comprising a cooling unit that cools down a first fluid, said cooling unit is connected through first pipes, which transport the first fluid, to an accumulation tank that calculates the temperature of the first fluid, and if such first fluid reaches a temperature of -30°C or less, the accumulation tank sends it to the second phase and if said fluid does not reach a certain temperature, it is returned through second pipes to the first cooling unit and it is recirculated until it reaches the predetermined temperature, a second phase wherein, when the first fluid reaches a temperature of at least -30°C, the accumulation tank sends said first fluid through third pipes to a collector, which, by means of fourth pipes said fluid freezes a second fluid that passes through the interior of a pipe, a metallic element or a mechanical adjustment by means of a closed circuit, a third phase wherein the first fluid returns to the collector by means of fifth pipes, and a fourth phase wherein the first fluid, having a temperature that is higher than the temperature resulting from the exchange in the second phase, returns to the cooling unit through sixth pipes, and cools down until reaching the predetermined temperature; said first fluid comprising the following composition: between 55-85% of water and between 15-45% of a saline solution of carboxylic acids.

### BACKGROUND OF THE INVENTION

Different systems and devices for cooling pipes are known in the state of the art. Thus, state of the art is Patent US4112706 "APPARATUS FOR FREEZING A SLUG OF LIQUID IN A SECTION OF A LARGE DIAMETER FLUID TRANSMISSION LINE", of the year 1976, in the name Beryle D. BRISTER, which refers to an apparatus and a method for freezing a slug of water to form an ice plug in a section of a pipe for hydrostatic testing purposes. The ice plug if formed by transferring thermal energy from the slug of water through the walls of the pipe to a cryogenic colling fluid such as liquid nitrogen. A section of the pipe is filled with water and is enclosed by an insulated chamber. The chamber is filled with liquid nitrogen to form a pool around the pipe. The liquid nitrogen is agitated by discharging a stream of nitrogen vapor through the pool. The heat exchange occurs as a result of the heat being transferred directly from the surface of the pipe to the liquid nitrogen by the action of the convection currents produced by the vigorous agitation of the liquid associated with the motion of the nitrogen vapour. In a preferred embodiment, the liquid nitrogen is diffused over the surface of the pipe by means of a permeable layer of material that is easily wetted by the liquid nitrogen.

Also known is European Patent n° 0584686 (ES2085693T3) "FREEZING DEVICE FOR PIPES FILLED WITH FLULID", in the name ROTHENBERGER WERKZEUGE-MASCHINEN GMBH, of the year 1993, which refers to a freezing device for pipes filled with liquid having a housing essentially comprising rigid housing parts which are in the form of half-shells, each having a wraparound partition and two front walls that can be braced against each other, forming an annular space between the two front walls of the wraparound partition and the pipe. The front walls contain elastomeric seals, the inner sides of which are directed towards the surface of the pipe. The annular space has an inlet opening for a cooling fluid, for example, for liquid carbon dioxide. For a better use of the cooling agent, the seals have on their circumference, in the region of their edges directed towards the pipe, sealing edges which, with increasing pressure in the annular space, can be lifted off the surface of the pipe in such a way that there form between the surface of the pipe and the sealing edges gaps for the escape of the refrigerant, flowing over the surface of the pipe. The seals preferably have on the side facing the annular space half frustoconical faces, the smallest diameter of which corresponds at most to the diameter of the pipe.

Further, it is worth noting Patent US10024479 "SYSTEM AND METHOD FOR PROVIDING UPKEEP AND MAINTENANCE TO PIPING SYSTEMS", in the name of James HENDERSON, of the year 2013, which refers to a system and method for providing upkeep and maintenance of piping. A system for providing upkeep and maintenance to piping systems, including an improved pipe freezing apparatus. In a specific embodiment, the system quite useful to replace worn valves that may require digging underground to expose enough of the pipe system. The invention in addition provides for novel tools for removing the valve. The preferred embodiment further improves safety at work when using CO2 (dry ice) evaporating and venting the chamber as a gas displacing oxygen. The novel design of the pipe freezing apparatus described in this patent can be installed by hand without tools. Said design further obviates a need for a specifically designed vent for the pipe freezing apparatus.

Last, the US Patent US4416118 "METHOD AND APPARATUS FOR CONTROLLING THE FORMATION OF A TEMPORARY PLUG IN A FLUID TRANSMISSION LINE" in the name of BRISTER BERYLE D of the year 1981 is known and refers to a method for controlling the formation of a temporary plug in a fluid transmission line, said plug comprising a quantity of liquid disposed within the interior of said transmission line and frozen by circulating a cryogenic fluid through a chamber formed by a housing disposed around the exterior of said transmission line; providing a housing disposed around the exterior of said transmission line and forming a chamber delimited at least in part by the exterior surface of said transmission line, said housing including a fluid inlet conduit and a fluid vent conduit; providing a first temperature sensor at a point above said surface of said transmission line delimiting said chamber and in the flow path of said cryogenic fluid through said chamber below which point the level of liquid cryogenic fluid is to be limited; circulating a cryogenic fluid through said chamber and venting fluid vapor from said chamber through said vent conduit; sensing a change in temperature at said point in said flow path; and throttling the flow of cryogenic fluid to said chamber when the sensed temperature indicates the presence of liquid cryogenic fluid at said point in said flow path.

### BRIEF DESCRIPTION OF THE INVENTION

The present invention falls within the field of methods for cooling pipes.

One of the nearest documents is Patent US4112706.

Said patent solves the problem of allowing to freeze large-diameter pipes without the use of large facilities. This is achieved by using a NO2 tank that requires a chimney for letting the vapour out.

On the other hand, the mentioned patent has the drawback of using a highly polluting gas which causes the greenhouse effect.

The present invention solves the problem of how to freeze at high temperatures using non-polluting elements and with hardly any loss of material, by using a closed circuit having a first fluid inside, said first fluid reaches the desired temperature and then transfers this temperature to the element to be frozen, whether they be the fluids inside the pipes in an invasive and/or e non-invasive way, of metallic elements and of mechanical adjustments by means of a closed circuit, the first fluid being a mixture of a saline solution of carboxylic acids, which, on the one hand make them non-polluting and, on the other hand, these can reach high freezing temperatures below -30°C, and lastly, having hardly any material losses, as the first fluid does not evaporate but is recuperated.

An object of the present invention is a method for freezing fluids in pipes in an invasive and/or in a non-invasive way, for realising metallic elements or for making mechanical adjustments by means of a closed circuit, of the type comprising: a first phase comprising a cooling unit that cools down a first fluid, said cooling unit is connected through first pipes, which transport the first fluid, to an accumulation tank that calculates the temperature of the first fluid, and if such first fluid reaches -30°C or less, the accumulation tank sends it to the second phase and if said fluid does not reach a certain temperature, it is returned through second pipes to the first cooling unit and it is recirculated until it reaches the predetermined temperature, characterised in that it comprises a second phase wherein, when the first fluid reaches a temperature of at least -30°C, the accumulation tank sends said first fluid through third pipes to a collector, which, by means of fourth pipes said fluid freezes a second fluid that passes through the interior of a pipe, a metallic element or a mechanical adjustment by means of a closed circuit, a third phase wherein the first fluid returns to the collector by means of fifth pipes, and a fourth phase wherein the first fluid, having a temperature that is higher than the temperature resulting from the exchange in the second phase, returns to the cooling unit through sixth pipes, and cools down until reaching the predetermined temperature; said first fluid comprising the following composition: between 55-85% of water and between 15-45% of a saline solution of carboxylic acids.

### BRIEF DESCRIPTION OF THE DRAWINGS

To facilitate the explanation, attached to this disclosure is a sheet of drawings representing a practical embodiment, which is cited by way of as a non-limiting example of the scope of this invention:

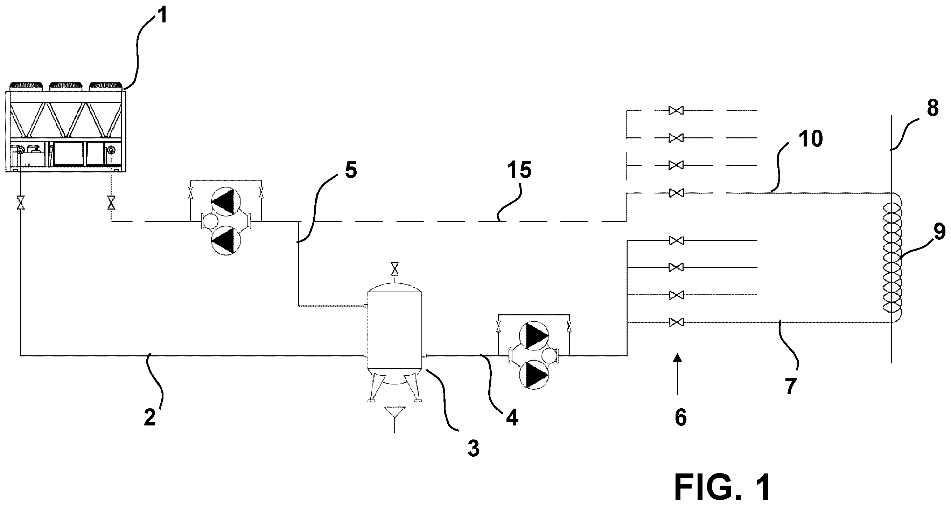

- Figure 1 is a schematic view of the object of the present invention.

### SPECIFIC EMBODIMENT OF THE PRESENT INVENTION

Figure 1 illustrates a first cooling unit 1, first pipes 2, an accumulation tank 3, second pipes 5, a collector 6, third pipes 4, fourth pipes 7, pipe 8, terminal 9, fifth pipes 10, and sixth pipes 15.

Thus, the method of the present invention comprises the following phases:
A first phase, called "production phase", wherein a first cooling unit 1 is defined, which cools a first fluid. Said cooling unit 1 is connected to an accumulation tank 3 by means of first pipes 2 in whose interior the first fluid is transported. The accumulation tank calculates the temperature of the first fluid and, if such first fluid reaches -30°C or less, the accumulation tank 3 sends the first fluid to the second phase.

If, on the contrary, such temperature is not reached, the accumulation tank 3 would return the first fluid back to the first cooling unit 1 by means of second pipes 5, so that cooling is continued by recirculating thereof until it reaches the temperature needed according to the use and the material to be frozen. In other words, the freezing temperature will be different for freezing water or, for instance, for releasing a seized screw: freezing the seized screw will reduce its size and this will allow its removal.

In the second phase, referred to as the distribution phase, when the first fluid reaches a temperature of at least -30°C, the accumulation tank 3 sends said first fluid to a collector 6, through third pipes 4.

Said first fluid is directed from the collector 6, by means of fourth pipes 7 towards a pipe 8, in this case. Said pipe 8 is gradually cooled down by means of a coil, which acts as a heat exchanger and transfers the cold to the second fluid that is going through inside it, for example, water, until it freezes. In addition, an invasive way could be envisaged wherein the second fluid is frozen inside the pipe 8. Another option would be to freeze a metallic element instead of a fluid, for example, a stuck screw that cannot be otherwise released and which is reduced in size by means of the freezing and can thus be released. Furthermore, mechanical adjustments can be made, that is, any maintenance works that require the contraction of a metal so that two pieces can be coupled or uncoupled with respect to one another. By way of example: coupling shells on shaft or uncoupling bolts (screws) that are stuck.

In the third phase, the first fluid, once the pipe 8 has cooled down and the second fluid has frozen, that is, this is a fluid that is hotter than the fluid that was flowing through the fourth pipes 7, said first fluid returns to the collector 6 through the fifth pipes 10.

Lastly, at the fourth phase, where the first fluid, having been heated by the exchange in the second phase, returns to the first cooling unit 1 through sixth pipes 15, cools down until reaching the determined temperature and in this way the first phase starts again.

The first fluid has the following composition:
- Between approximately 55-85% of water, and
- Between approximately 15-45% of a saline solution of carboxylic acids.

With more water and less salts, the freezing temperature increases, that is, freezing will occur at temperatures closer to -30°C. On the contrary, with less water and more salts, the freezing temperature will be lower, possibly approximately -50°C, -70°C, etc.

It should be noted that at present it is quite difficult to control the temperature of fluids and gas if the gas is not released outside, with the occurrence of smoke columns that involve losing material, spending money, besides arising concern among the population.

In addition, the use of gases like N2 should be avoided for some of the mentioned purposes, like performing mechanical adjustments, because the N2 at such low temperatures could damage the metal. This is the reason why it has traditionally been heated for releasing screws, and not cooled.

Optionally, the carboxylic saline solution is made up of a mixture of Potassium Acetate and Potassium Formate. Both these elements offer the advantage that they are not pollutants and do not evaporate at the working temperatures, as opposed to N2, which causes the smoke columns.

Potassium Acetate is a natural product found in tree sap. It is antifreeze, dissolves into water and hardly crystallizes, except at very low temperatures. The Potassium Formate is a defroster with anti-corrosive properties.

Optionally, the composition of the second fluid comprises between 0,1-4,0% corrosion inhibitor, which prevents metal pipes from corroding. This is optional because in the event that the pipes are made of concrete, for example, the anticorrosion would not be necessary.

The present invention describes a new method for pipe refrigeration. The examples provided herein are not limitative of the present invention, which may have different applications and/or adaptations, as long as they fall within the scope of the following claims.

## Claims

1. A method for freezing fluids in pipes in either an invasive or a non-invasive way, for releasing metallic elements or for making mechanical adjustments by means of a closed circuit, of the type comprising:
- a first phase comprising a cooling unit (1) which cools a first fluid, said cooling unit (1) is connected by means of first pipes (2) that convey the first fluid to an accumulation tank (3) which calculates the temperature of the first fluid, and when such first fluid reaches -30°C or less, the accumulation tank (3) sends it to the second phase; if the determined temperature is not reached, the accumulation tank brings the fluid through second pipes (5) back to the cooling unit (1) and said fluid is recirculated until it reaches the predetermined temperature,
- a second phase wherein, when the first fluid reaches a temperature of at least -30°C, the accumulation tank (3) sends said first fluid through third pipes (4) to a collector (6) which, by means of fourth pipes (7) said fluid freezes a second fluid that passes through the interior of a pipe (8), a metallic element or a mechanical adjustment by means of a closed circuit,
- a third phase wherein the first fluid returns to the collector (6) by means of fifth pipes (10), and
- a fourth phase wherein the first fluid, having a higher temperature than the temperature provided by the exchange of the second phase, returns to the cooling unit (1) through sixth pipes (15), and cools down until reaching the predetermined temperature;
said first fluid comprising the following composition:
- Between 55-85% water, and
- Between 15-45% of a saline solution of carboxylic acids.

2. Method according to claim 1 **characterised in that** the saline solution of carboxylic acids is made up by a mixture of Potassium Acetate and Potassium Formate.

3. Method according to claim 1 o 2, **characterised in that** the second fluid comprises between 0,1-4,0% of a corrosion inhibitor.

## Patentansprüche

1. Verfahren zum invasiven oder nicht-invasiven Einfrieren von Flüssigkeiten in Rohrleitungen, zum Freisetzen von Metallelementen oder zur Durchführung mechanischer Justierungen mithilfe eines geschlossenen Kreislaufs, das Folgendes umfasst:
- eine erste Phase, die eine Kühleinheit (1) umfasst, die ein erstes Fluid kühlt, wobei die Kühleinheit (1) über erste Leitungen (2), die das erste Fluid befördern, mit einem Speicherbehälter (3) verbunden ist, der die Temperatur des ersten Fluids berechnet, und wenn diese erste Flüssigkeit eine Temperatur von -30°C oder weniger erreicht, wird sie vom Speicherbehälter (3) in die zweite Phase geleitet; wenn die festgelegte Temperatur nicht erreicht wird, führt der Speicherbehälter die Flüssigkeit durch zweite Leitungen (5) zurück zur Kühleinheit (1), und die Flüssigkeit wird so lange wieder in den Kreislauf gebracht, bis sie die vorgegebene Temperatur erreicht hat,
- eine zweite Phase, in der der Speicherbehälter (3) das erste Fluid, sobald das erste Fluid eine Temperatur von mindestens -30°C erreicht, durch dritte Leitungen (4) zu einem Sammler (6) führt, in der das Fluid mittels vierter Leitungen (7) ein zweites Fluid gefriert, das mithilfe eines geschlossenen Kreislaufs durch eine Leitung (8), ein Metallelement oder eine mechanischen Justierung fließt,
- eine dritte Phase, in der das erste Fluid über fünfte Leitungen (10) zum Sammler (6) zurückkehrt, und
- eine vierte Phase, in der das erste Fluid, das eine höhere Temperatur aufweist als die Temperatur, die durch den Austausch der zweiten Phase erzeugt wird, durch sechste Leitungen (15) in die Kühleinheit (1) zurückkehrt und sich abkühlt, bis es die vorgegebene Temperatur erreicht;
wobei die erste Flüssigkeit folgende Zusammensetzung umfasst:
- zwischen 55-85 % Wasser, und
- zwischen 15-45 % einer Salzlösung von Carbonsäuren.

2. Verfahren nach Anspruch 1, **dadurch gekennzeichnet, dass** die Salzlösung der Carbonsäuren aus einer Mischung von Kaliumacetat und Kaliumformiat besteht.

3. Verfahren nach Anspruch 1 oder 2, **dadurch gekennzeichnet, dass** die zweite Flüssigkeit zwischen 0,1-4,0 % eines Korrosionsschutzmittels enthält.

## Revendications

1. Procédé de congélation de fluides dans des tuyaux d'une manière invasive ou non invasive, pour dégager des éléments métalliques ou pour effectuer des réglages mécaniques à l'aide d'un circuit fermé, du type comprenant :
- une première phase comprenant une unité de refroidissement (1) qui refroidit un premier fluide, ladite unité de refroidissement (1) est raccordée à l'aide de premiers tuyaux (2) qui acheminent le premier fluide à un réservoir d'accumulation (3) qui calcule la température du premier fluide, et lorsqu'un tel premier fluide atteint -30 °C ou moins, le réservoir d'accumulation (3) l'envoie à la deuxième phase ; si la température déterminée n'est pas atteinte, le réservoir d'accumulation ramène le fluide à l'unité de refroidissement (1) par des deuxièmes tuyaux (5) et ledit fluide est remis en circulation jusqu'à ce qu'il atteigne la température prédéterminée,
- une deuxième phase dans laquelle, lorsque le premier fluide atteint une température d'au moins -30 °C, le réservoir d'accumulation (3) envoie ledit premier fluide par des troisièmes tuyaux (4) à un collecteur (6) qui, à l'aide de quatrièmes tuyaux (7) ledit fluide congèle un deuxième fluide qui passe à travers l'intérieur d'un tuyau (8), un élément métallique ou un réglage mécanique à l'aide d'un circuit fermé,
- une troisième phase dans laquelle le premier fluide revient au collecteur (6) au moyen de cinquièmes tuyaux (10), et
- une quatrième phase dans laquelle le premier fluide, présentant une température plus élevée que la température procurée par l'échange de la deuxième phase, revient à l'unité de refroidissement (1) par des sixièmes tuyaux (15), et refroidit jusqu'à atteindre la température prédéterminée ;
ledit premier fluide comprenant la composition suivante :
- entre 55 et 85 % d'eau, et
- entre 15 et 45 % d'une solution saline d'acides carboxyliques.

2. Procédé selon la revendication 1 **caractérisé en ce que** la solution saline d'acides carboxyliques est composée d'un mélange d'acétate de potassium et de formate de potassium.

3. Procédé selon la revendication 1 ou 2, **caractérisé en ce que** le deuxième fluide comprend entre 0,1 et 4,0 % d'un inhibiteur de corrosion.
